# EUROPÄISCHE PATENTSCHRIFT

(11) **EP 2 012 960 B1**
(45) Veröffentlichungstag und Bekanntmachung des Hinweises auf die Patenterteilung: **21.12.2011**
(21) Anmeldenummer: 07722340.2
(22) Anmeldetag: 27.04.2007
(51) Int. Cl.: B23D 61/02, B23D 65/00

(54) **VERFAHREN ZUR HERSTELLUNG DER RÄUMSCHNEIDEN EINES KREISSÄGEBLATTES**
A PROCESS FOR MANUFACTURING CLEARING EDGES OF A CIRCULAR SAW BLADE
PROCÉDÉ DE FABRICATION DE LAMES D'ÉVACUATION D'UNE LAME DE SCIE CIRCULAIRE

(30) Priorität: 04.05.2006 DE 102006021136
(43) Veröffentlichungstag der Anmeldung: 14.01.2009
(73) Patentinhaber: Leitz GmbH & Co. KG, 73447 Oberkochen (DE)
(72) Erfinder: HUMPF, Bernhard, 73485 Unterschneidheim (DE)
(74) Vertreter: Rehmann, Thorsten
(86) Internationale Anmeldenummer: PCT/DE2007/000783
(87) Internationale Veröffentlichungsnummer: WO 2007/128276

(56) Entgegenhaltungen:
- EP-A2- 0 900 616
- CH-A- 310 579
- DE-A1- 1 953 416
- DE-A1- 2 534 200
- DE-A1- 19 733 483
- DE-C- 348 851
- DE-C- 931 067
- DE-U- 7 432 420
- DE-U1- 7 702 982
- DE-U1- 8 304 611
- FR-A1- 2 541 156
- GB-A- 616 664
- US-A- 214 389
- US-A- 300 805
- US-A- 342 535
- US-A- 788 236

## Beschreibung

Die Erfindung betrifft ein Verfahren gemäß dem Oberbegriff des Anspruchs 1 zur Bildung einer Räumschneide in einem Kreissägeblatt bestehend aus einem Tragkörper und einer Mehrzahl von über den Umfang verteilten Schneidzähnen, bei dem der Tragkörper eine Mehrzahl von Materialausnehmungen aufweist und die Räumschneiden bereichsweise axial über den Tragkörper hervorstehen.

Ein solches Verfahren ist aus der DE 83 04 611 U1 bekannt. Aus der DE 25 34 200 A1 ist ein kreissägeblatt bekannt, wobei die Räumschneiden aus dem Tragkörper des Kreissägeblatts seitlich herausgebogen sind. Nachteilig ist, dass die herausgebogenen Räumschneiden federelastisch sind und dadurch dem Werkstück ausweichen können, so dass eine saubere Schnittbildung nicht immer gewährleistet ist.

Insbesondere bei der Bearbeitung von Rohholz in Sägewerken treten relativ lange Sägespäne auf. Diese langen Sägespäne werden nur unzureichend von herkömmlichen Sägeblättern ohne Räumschneiden aus dem Sägespalt abtransportiert. Dies kann dazu führen, dass der Schnittspalt verstopft, wodurch die Reibung erhöht wird und die dadurch entstehende hohe Temperatur zur Zerstörung des Kreissägeblatts führen kann.

Zur besseren Abfuhr der Sägespäne aus dem Schnittspalt werden die so genannten Räumschneiden am Kreissägeblatt vorgesehen, die dafür sorgen, dass auch lange Sägespäne aus dem Sägespalt abtransportiert werden. Diese Räumschneiden werden in Materialausnehmungen des Sägeblatts angeordnet und können mit einer flachen Frontfläche ausgebildet sein. Die Räumschneiden können unterschiedliche Längen aufweisen.

Aus der DE 20 2005 006 613 U1 ist es bekannt, an einem Kreissägeblatt zumindest zwischen einigen benachbarten Sägezähnen Spanbrecher auszubilden. Die Spanbrecher können als auf einem Sägezahnrücken angeordnete Nasen ausgebildet werden.

Die US 3,521,684 offenbart ein Kreissägeblatt mit Räumschneiden aus Hartmetall, die am Sägeblatt durch Nieten befestigt sind.

DE 199 47 638 A1, DE 299 17 360 U1 und DE 31 19 603 A1 zeigen Kreissägeblätter mit Räumschneiden, bei denen die Räumschneiden auf das Sägeblatt aufgelötet sind.

Die DE 201 11 424 U1 beschreibt ein Kreissägeblatt mit profilierten Räumschneiden, die am Kreissägeblatt durch Löten, Kleben oder Vernieten oder durch Schraubverbindungen befestigt sein können.

In der DE 20 2005 004 478 U1 wird ein Kreissägeblatt mit kurzen Räumschneiden offenbart, die weiter zur Sägenmitte reichen und die Sägezahngründe bis zur Vorderseite der kurzen Räumschneiden reichen.

Aus der DE 20 2005 001 719 U1 ist ein Kreissägeblatt mit Räumschneiden bekannt, bei dem die Räumschneiden einen Freiwinkel von mindestens 10 ° aufweisen.

DE 101 16 092 A1 und DE 201 05 630 U1 beschreiben Kreissägeblätter, die einen reduzierten Abstand der Schneidelemente auf der Zahnbrust und den äußeren Enden der Räumschneiden aufweisen.

In der DE 297 20 155 U1 wird ein Kreissägeblatt mit Räumschneiden offenbart, das im Bereich vor und/oder hinter den Räumschneiden Verjüngungen in der Sägeblattdicke aufweist.

Die aus einem anderen Material als der Tragkörper des Kreissägeblatts bestehenden Räumschneiden müssen in einem aufwändigen Arbeitsschritt zum Beispiel durch Auflöten bzw. Aufnieten von Hartmetallstangen oder Aufschrauben von Schneiden aus anderen Werkzeugstählen am Kreissägeblatt befestigt werden.

Das Aufbringen der Räumschneiden auf die Materialausnehmungen muss sehr sorgfältig erfolgen, damit beim Betrieb des Kreissägeblattes kein Sicherheitsrisiko für den Arbeiter dadurch entstehen kann, dass sich Räumschneiden vom Trägerwerkstoff des Kreissägeblatts lösen und den Maschinenbediener verletzen. Die Verfahren zum Aufbringen der Räumschneiden auf die Materialausnehmungen sind also dementsprechend aufwändig und unterliegen strengen Qualitätskontrollen. Außerdem muss nach dem Aufbringen der Räumschneiden ein anschließendes Spannungsarmglühen des Sägeblatts sowie ein definiertes Schleifen des seitlichen Überstandes der gegebenenfalls mit Freiwinkel versehenen Räumschneiden erfolgen. Nachteilig ist außerdem, dass durch die unterschiedlichen Wärmeausdehnungskoeffizienten des Sägeblatts und der Räumschneiden Spannungen im Sägeblatt entstehen, die sich ungünstig auf die Schnittqualität auswirken können.

Außerdem sind insbesondere Hartmetall-Räumschneiden auf gerade Formen beschränkt, damit sie durch eine Lötverbindung ausreichend fest mit dem Tragkörper verbunden werden können. Zur optimalen Ausräumung der Schnittfugen kann es aber erforderlich sein, dass andere Formen von Räumschneiden vorteilhafter sind. Außerdem ist bei der Befestigung durch Löten oder Nieten eine gewisse Mindesttragkörperdicke erforderlich. Bei einer zu geringen Tragkörperdicke von unter 1 mm kann keine ausreichende Festigkeit der Lötverbindung mehr erreicht werden. Außerdem ist ein erhöhter Verzug bei geringer Stammblattdicke zu erwarten. Dies ist insbesondere bei den Dünnschnittsägen zur Verringerung des Schnittspaltes bzw. des Verschnittanteils problematisch.

Aus der CH 310 579 ist es bekannt, ein Sägeblatt durch Anstauchen der Zähne mittels eines Stauchbolzens herzustellen. Die gestauchten Zähne werden anschließend zwischen Klemmbacken egalisiert. Durch die seitliche Pressung wird eine Verdichtung des Werkstoffes an der Zahnspitze hervorgerufen, die gleichzeitig eine Härtesteigerung der Zahnschneide zur Folge hat, da es sich um eine Kaltverformung handelt.

Aus der DE 1 953 416 ist es bekannt, einen Zahn kalt zu stauchen. Um dabei die Härte zu erhöhen, ohne anschließend egalisieren zu müssen, wird das Sägeblatt elektrisch erhitzt und nochmals gestaucht. Durch diese Warmverformung wird die Härte gesteigert.

Ausgehend von dieser Problemstellung soll ein Verfahren zur Erzeugung der Räumschneiden an dem eingangs beschriebenen Kreissägeblatt verbessert werden, um neben einer Verringerung der Schnittbreite, eine hohe Stabilität der Räumschneiden und eine damit einhergehende saubere Schnittbildung zu erzielen, sowie einen besseren Späneauswurf bei einer geringeren Erwärmung des Tragkörpers und gleichzeitig eine längere Werkzeugstandzeit bei reduzierten Herstellkosten zu erreichen.

Die Aufgabe wird erfindungsgemäß durch folgende Schritte gelöst:
1. Einführen eines rotierenden Andruckstiftes aus einem warmfesten Material in eine Materialausnehmung des Tragkörpers,
2. Pressen des Andruckstiftes gegen eine von der Materialausnehmung gebildete Wandung des Trägerkörpers,
3. lokales Erhitzen des Tragkörpers durch die Reibungswärme des rotierenden Andruckstiftes und
4. Bewegen des Andruckstiftes entlang der von der Materialausnehmung gebildeten Wandung, so dass das Material des Tragkörpers plastisch verformt wird und sich eine Räumschneide ausbildet.

Durch das Bewegen des Andruckstifts entlang von der Materialausnehmung gebildeten Wandung des Tragkörpers, in dem Bereich, in dem die Räumschneide vorgesehen ist, wird mittels eines Warmumformverfahrens die Räumschneide einstückig aus dem Tragkörper des Kreissägeblattes herausgearbeitet. Vorteilhafterweise kommt es hierdurch zu einer Verdichtung des Tragkörpermaterials und somit zu einer Härtung der Räumschneide. Dieses Verfahren ist sehr einfach durchzuführen, da die Wärme zum Umformen lokal durch Reibung des rotierenden Andruckstiftes erzeugt und der Andruckstift gegen den Stammblattwerkstoff gepresst wird, bis sich dieser verformt. Eine weitere Aufhärtung erfolgt dadurch, dass die plastisch verformte Stelle sich rasch abkühlen kann.

Vorteilhafterweise kann der Andruckstift eine Nut einer definierten Breite aufweisen, die so eingestellt ist, dass sie der Breite der zu erzeugenden Räumschneide entspricht. Auf diese Weise kann eine Räumschneide einer definierten Breite sehr einfach hergestellt werden. Ein umfangreiches Nachschleifen der Räumschneide ist hier zumeist nicht mehr erforderlich. Die Räumschneiden können direkt auf Fertigmaß hergestellt werden. Es auch möglich, die Räumschneiden mit Aufmaß herzustellen und auf das Fertigmaß zu schleifen.

Durch die schnelle Abkühlung des erwärmten Bereichs an der Luft und aufgrund der Wärmeabfuhr in den umgebenden Tragkörper, dem kalten Stammblatt, kann eine Aufhärtung des umgeformten Bereichs bewirkt werden, was sich vorteilhaft auf die Steifigkeit des Sägeblattes auswirkt.

Vorteilhafterweise besteht der Andruckstift aus einem warmfesten Material, z. B. Hartmetall, damit sich nur das Trägermaterial verformt und nicht der Andruckstift. Die Reibungswärme, die durch den rotierenden Andruckstift im Bereich der Materialausnehmungen erreicht werden sollte, sollte so hoch sein, dass das Trägermaterial erweicht werden kann. Es hat sich gezeigt, dass durch die Reibung zwischen Trägermaterial und Andruckstift Temperaturen von über 700 °C erzeugt werden können. Durch das lokale Erwärmen des Tragkörpers kann eine besonders präzise einstückige Ausformung der Räumschneide aus dem Trägerblattwerkstoff erfolgen.

Zur weiteren Erhöhung der Härte der Räumschneiden kann ein Legierungspulver auf den Trägerwerkstoff aufgebracht werden, das durch die lokale Erwärmung mit dem Trägerwerkstoff verschmolzen wird und eine noch härtere Räumschneide ermöglicht.

Um die Werkzeugstandzeit des Kreissägeblatts zu erhöhen, weist der Bereich der Räumschneiden vorzugsweise eine größere Härte als der restliche Tragkörper auf. Dazu kann auf den Bereich, in dem die Räumschneiden vorgesehen sind, eine Legierung aus einem höher legierten Stahl aufgebracht werden. Es hat sich gezeigt, dass sich dazu besonders die Elemente der IV. bis VIII. Nebengruppe des Periodensystems der Elemente eignen. Das Aufbringen der Legierung kann in Form eines Legierungspulvers erfolgen, das zum Warmumformverfahren auf den Tragkörper des Kreissägeblattes aufgegeben wird und während des Warmumformverfahrens auf die Oberfläche des Tragkörpers und auf den Bereich der Räumschneiden aufgeschmolzen wird.

Vorteilhafterweise ist es hierdurch möglich, Räumschneiden abweichend von ihrer geraden Form beliebig geformt auszubilden und dadurch in ihrer Funktionsweise für ihre Aufgabe, das Herausfördern von Spänen aus dem Schnittspalt, zu optimieren. Außerdem kann das Prinzip der Räumschneiden auch bei sehr dünnen Stammblättern (< 1mm) angewendet werden, bei denen kein Auflöten möglich ist. Die stabilisierende Wirkung kann bei dieser Ausführung der Räumschneiden dadurch erreicht werden, dass der Werkstoff bei der Umformung ausgehärtet und verfestigt wird. Die verdickten Bereiche des Stammblattes, die als Räumschneiden wirken, können entweder direkt auf Fertigmaß durch Umformen oder mit Aufmaß hergestellt werden und anschließend konventionell geschliffen werden. Durch ein Umformverfahren, vorteilhafterweise ein Warmumfomverfahren, kann eine plastische Deformation des Tragkörpermaterials erfolgen.

Die Materialausnehmungen, in denen Räumschneiden ausgebildet sind, können vorteilhafterweise eine geschlossene Umfangskontur aufweisen oder radial aus dem Tragkörper austretende Öffnungen aufweisen. Auf diese Weise können Materialausnehmungen und Räumschneiden in einer Art und Weise im Tragkörper verteilt werden, die eine optimale Schnittgüte ermöglichen.

Die Breite der Räumschneiden ist so einzustellen, dass sie breiter ist als die Dicke des Tragkörpers und dünner als die Breite des Schneidzahnes, damit eine optimale Räumung der Schnittfuge erfolgen kann.

Außerdem ist es vorteilhaft, wenn das Kreissägeblatt Räumschneiden aufweist, die sowohl geradlinig als auch bogenförmig bzw. entlang einer Freiformkontur verlaufen. Hierdurch ist es möglich, die Räumschneiden für eine optimale Räumung der Schnittfuge auszubilden, ohne auf die Herstellbarkeit achten zu müssen.

Die Räumschneiden sind in Umdrehungsrichtung des Sägeblattes im hinteren Bereich der Materialausnehmungen vorgesehen, damit die optimale Ausräumung der Schnittfuge erfolgen kann.

Anhand einer Zeichnung sollen Ausführungsbeispiele der Erfindung nachfolgend näher erläutert werden. Es zeigen
- Figur 1:: eine Teil-Draufsicht auf ein erstes Kreissägeblatt mit einstückig ausgebildeten Räumschneiden;
- Figur 2:: eine Teil-Draufsicht auf ein weiteres Kreissägeblatt mit einstückig ausgebildeten Räumschneiden;
- Figur 3:: eine perspektivische Ansicht eines weiteren Kreissägeblattes mit einstückig ausgebildeten Räumschneiden, die geradlinig verlaufen;
- Figur 4:: eine perspektivische Ansicht eines weiteren Kreissägeblattes mit einstückig ausgebildeten Räumschneiden, die bogenförmig verlaufen und
- Figur 5:: eine Teilansicht eines Kreissägeblattes, das mit einem Andruckstift verformt wird.

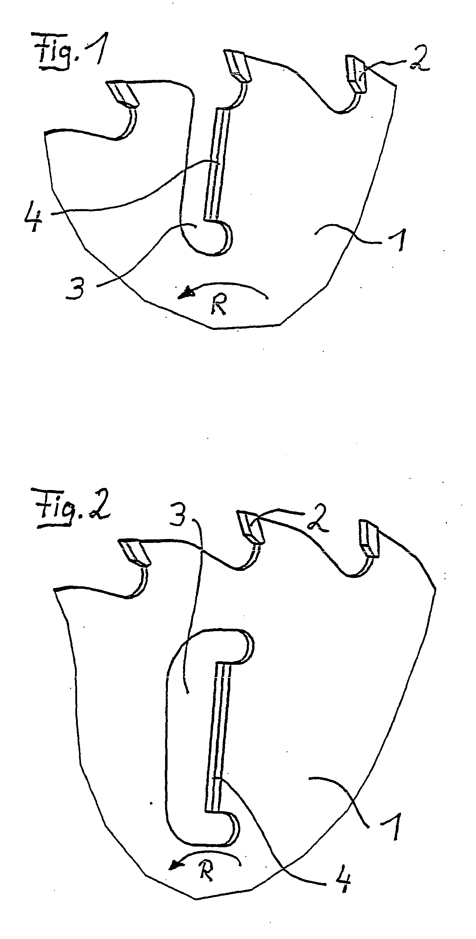

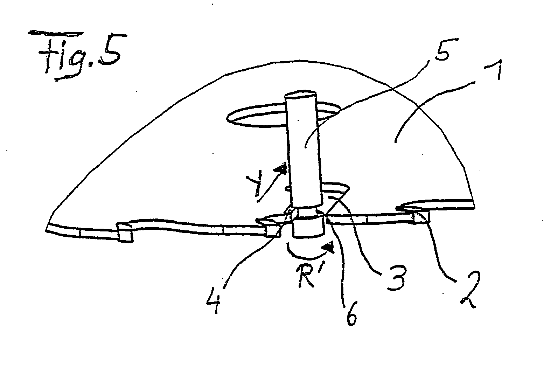

Figur 1 zeigt ein Kreissägeblatt mit einem Tragkörper 1, das eine Mehrzahl von über den Umfang verteilten Schneidzähnen 2 aufweist. Im Tragkörper 1 ist eine Mehrzahl von Materialausnehmungen 3 vorgesehen, die radial aus dem Tragkörper 1 austretende Öffnungen aufweisen. Im in Umdrehungsrichtung R des Sägeblatts hinteren Bereich der Materialausnehmungen 3 sind Räumschneiden 4 vorgesehen. Die Räumschneiden 4 sind einstückig mit dem Tragkörper 1 ausgebildet. Zur Ausbildung der Räumschneiden 4 wird in einem Warmumformverfahren ein Andruckstift 5 entlang eines Bereiches der Materialausnehmung 3 entlang geführt, damit eine plastische Verformung des Tragkörpers 1 erreicht wird und eine Räumschneide 4 entsteht (vgl. Fig. 5). Während des Warmumformverfahrens zur Herstellung der Räumschneide 4 wird ein Legierungspulver aus Metall, das eine höhere Härte aufweist als das Tragkörpermaterial auf den Bereich der Materialausnehmung 3, aus dem die Räumschneide 4 ausgebildet wird, aufgebracht und über den Andruckstift 5 auf den Tragkörperwerkstoff auflegiert.

Figur 2 zeigt ein Kreissägeblatt mit einem Tragkörper 1 und Schneidzähnen 2, bei dem die Materialausnehmungen 3 eine geschlossene Umfangskontur aufweisen, also vollständig vom Tragkörper 1 umschlossen sind. Im in Umdrehungsrichtung R hinteren Bereich der Materialausnehmung 3 des Sägeblattes ist die Räumschneide 4 einstückig mit dem Tragkörper 1 des Kreissägeblattes ausgebildet. Die Räumschneide 4 weist eine gradlinig verlaufende Form auf. Die Breite der Räumschneide 4 ist größer als die Dicke des Tragkörpers 1 und kleiner als die Breite der Schneidzähne 2.

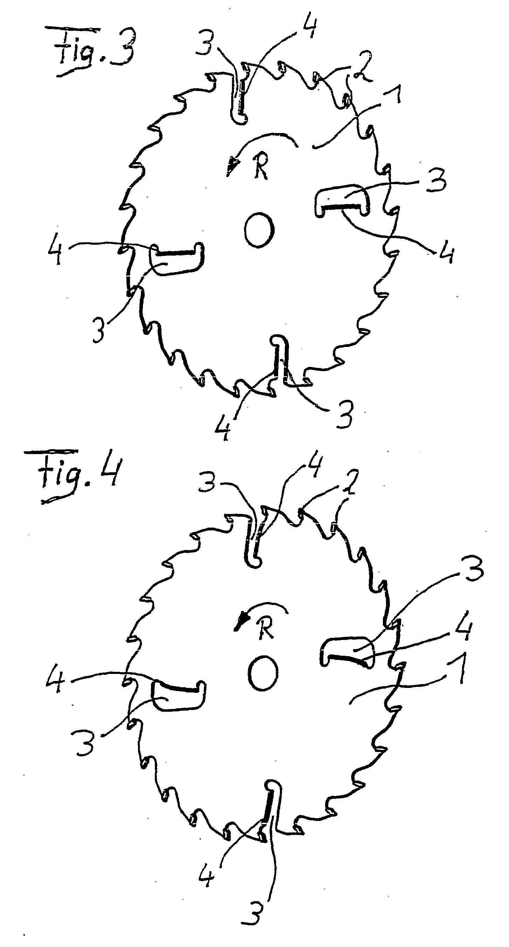

Figur 3 zeigt ein Kreissägeblatt mit einem Tragkörper 1, das eine Mehrzahl von über den Umfang verteilten Schneidzähnen 2 aufweist. Im Tragkörper 1 sind eine Mehrzahl von Materialausnehmungen 3 zu erkennen, die radial aus dem Tragkörper 1 austretende Öffnungen aufweisen oder vollständig vom Tragkörper 1 umschlossen sind. Im in Umdrehungsrichtung R hinteren Bereich der Materialausnehmungen 3 des Sägeblattes sind Räumschneiden 4 vorgesehen, die geradlinig verlaufen und einstückig mit dem Trägkörper 1 ausgebildet sind.

Figur 4 zeigt ein weiteres Kreissägeblatt mit einem Tragkörper 1 und Schneidzähnen 2, bei dem die Materialausnehmungen 3 radial aus dem Tragkörper 1 heraustreten oder vollständig vom Tragkörper 1 umschlossen sind. Im in Umdrehungsrichtung R des Kreissägeblattes hinteren Bereich der Materialausnehmungen 3 sind bogenförmig verlaufende Räumschneiden 4 einstückig mit dem Tragkörper 1 ausgebildet.

Figur 5 zeigt ein weiteres Kreissägeblatt mit einem Trägkörper 1 und Schneidzähnen 2, bei dem in eine Materialausnehmung 3 ein in Umdrehungsrichtung R' rotierender Andruckstift 5 eingeführt ist und gegen den Tragkörper 1 gepresst wird. Durch die Rotationsbewegung des Andruckstiftes 5 wird der Tragkörper 1 lokal so stark erwärmt, dass das Material des Tragkörpers 1 weich wird und durch weiteres Drücken des Andrückstiftes 5 gegen den Tragkörper 1 im Bereich der Materialausnehmung 3 in die Nut 6 des Andruckstiftes 5 fließt. Der Andruckstift 5 besteht aus Hartmetall. Der rotierende Andruckstift 5 wird ggf. mit Anpressdruck entlang der Materialausnehmung 3 geführt und bewirkt durch die lokale Erwärmung des Tragkörpermaterials die Umformung des Tragkörpermaterials, wodurch nach dem anschließenden Abkühlen des Tragkörpermaterials die einstückig mit dem Tragkörper 1 ausgebildete Räumschneide 4 entsteht. Der rotierende Andruckstift 5 wird in Vorschubrichtung Y entlang der Materialausnehmung 3 bewegt. Durch die schnelle Abkühlung des erwärmten Bereichs an der Luft und aufgrund der Wärmeabfuhr in das umgebende kalte Tragkörpermaterial wird eine Aufhärtung des umformten Bereiches mit der Räumschneide 4 erreicht. Die Steifigkeit des Sägeblattes wird dadurch verbessert.

### Bezugszeichenliste

- 1: Tragkörper
- 2: Schneidzahn
- 3: Materialausnehmung
- 4: Räumschneide
- 5: Andruckstift
- 6: Nut
- R: Umdrehungsrichtung
- R': Umdrehungsrichtung
- Y: Vorschubrichtung

## Patentansprüche

1. Verfahren zur Bildung einer Räumschneide (4) in einem Kreissägeblatt bestehend aus einem Tragkörper (1) und einer Mehrzahl von über den Umfang verteilten Schneidzähnen (2), bei dem der Tragkörper (1) eine Mehrzahl von Materialausnehmungen (3) aufweist und die Räumschneiden (4) bereichsweise axial über den Tragkörper (1) hervorstehen, **gekennzeichnet durch** die folgenden Schritte:
1. Einführen eines rotierenden Andruckstiftes (5) aus einem warmfesten Material in eine Materialausnehmung (3) des Tragkörpers (1),
2. Pressen des Andruckstiftes (5) gegen eine von der Materialausnehmung (3) gebildete Wandung des Trägerkörpers (1),
3. lokales Erhitzen des Tragkörpers (1) **durch** die Reibungswärme des rotierenden Andruckstiftes (5) und
4. Bewegen des Andruckstiftes (5) entlang der von der Materialausnehmung (3) gebildeten Wandung, so dass das Material des Tragkörpers (1) plastisch verformt wird und sich eine Räumschneide (4) ausbildet.

2. Verfahren nach Anspruch 1, **dadurch gekennzeichnet, dass** der Andruckstift (5) eine Nut (6) mit einer Breite aufweist, deren Breite der Breite der zu erzeugenden Räumschneide (4) entspricht.

3. Verfahren nach Anspruch 1 oder 2, **dadurch gekennzeichnet, dass** ein Legierungspulver auf den Tragkörper (1) im Bereich der Materialausnehmung (3) aufgebracht wird.

4. Verfahren nach einem der Ansprüche 1 bis 3, **dadurch gekennzeichnet, dass** der Bereich der Räumschneiden (4) eine größere Härte als der restliche Tragkörper (1) aufweist.

5. Verfahren nach einem oder mehreren der Ansprüche 1 bis 3, **dadurch gekennzeichnet, dass** die Räumschneide (4) aufgehärtet wird.

6. Verfahren nach einem der vorstehenden Ansprüche, **dadurch gekennzeichnet, dass** die Materialausnehmungen (3) eine geschlossene Umfangskontur aufweisen.

7. Verfahren nach einem der vorstehenden Ansprüche, **dadurch gekennzeichnet, dass** die Materialausnehmungen (3) radial aus dem Tragkörper (1) austretende Öffnungen aufweisen.

8. Verfahren nach Anspruch 1, **dadurch gekennzeichnet, dass** auf den Bereich der Räumschneiden (4) eine Legierung aus einem höher legierten Stahl aufgebracht wird.

9. Verfahren nach Anspruch 8, **dadurch gekennzeichnet, dass** der Legierung Elemente der IV. bis VIII. Nebengruppe des Periodensystems der Elemente zugegeben werden.

10. Verfahren nach Anspruch 8 oder 9, **dadurch gekennzeichnet, dass** das Aufbringen der Legierung in Form eines Legierungspulvers erfolgt.

11. Verfahren nach einem oder mehreren der voranstehenden Ansprüche, **dadurch gekennzeichnet, dass** die Räumschneiden (4) in Umdrehungsrichtung R des Sägeblattes im hinteren Bereich der Materialausnehmungen (3) angebracht werden.

12. Verfahren nach einem oder mehreren der voranstehenden Ansprüche, **dadurch gekennzeichnet, dass** die Räumschneiden (4) so angebracht werden, dass sie eine bogenförmige Kontur aufweisen.

## Claims

1. Method for forming a clearing edge (4) in a circular saw blade consisting of a support body (1) and a plurality of cutting teeth (2) distributed over the periphery, in which the support body (1) has a plurality of material recesses (3) and the clearing edges (4) project axially beyond the support body (1) in regions, **characterised by** the following steps:
1. inserting a rotating pressure pin (5) made of a heat-resistant material into a material recess (3) of the support body (1),
2. pressing the pressure pin (5) against a wall of the support body (1) formed by the material recess (3),
3. locally heating the support body (1) by means of the frictional heat of the rotating pressure pin (5) and
4. moving the pressure pin (5) along the wall formed by the material recess, so the material of the support body (1) is plastically deformed and a clearing edge (4) is formed.

2. Method according to claim 1, **characterised in that** the pressure pin (5) has a groove (6) with a width, the width of which corresponds to the width of the clearing edge (4) to be produced.

3. Method according to claim 1 or 2, **characterised in that** an alloy powder is applied to the support body (1) in the region of the material recess (3).

4. Method according to any one of claims 1 to 3, **characterised in that** the region of the cutting edges (4) has a greater hardness than the remaining support body (1).

5. Method according to any one or more of claims 1 to 3, **characterised In that** the clearing edge (4) is hardened.

6. Method according to any one of the preceding claims, **characterised in that** the material recesses (3) have a closed peripheral contour.

7. Method according to any one of the preceding claims, **characterised in that** the material recesses (3) have openings emerging radially from the support body (1).

8. Method according to claim 1, **characterised in that** an alloy of a higher-grade alloyed steel is applied to the region of the clearing edges (4).

9. Method according to claim 8, **characterised in that** elements of groups IV to VIII of the periodic system of elements are added to the alloy.

10. Method according to claim 8 or 9, **characterised in that** the application of the alloy takes place in the form of an alloy powder.

11. Method according to any one or more of the preceding claims, **characterised in that** the clearing edges (4) are provided in the posterior region of the material recesses (3) in the rotational direction R of the saw blade.

12. Method according to any one or more of the preceding claims, **characterised in that** the clearing edges (4) are installed such that they have an arched shape.

## Revendications

1. Procédé pour former un tranchant d'évacuation (4) dans une lame de scie circulaire consistant en un corps porteur (1) et plusieurs dents de coupe (2) réparties sur le pourtour, et dans laquelle le corps porteur (1) présente plusieurs évidements de matériau (3) et, localement, les tranchants d'évacuation (4) dépassent axialement du corps porteur (1), **caractérisé par** les étapes suivantes :
1. introduire dans un évidement du matériau (3) du corps porteur (1) une goupille de pression (5) en rotation, faite d'un matériau résistant à la chaleur,
2. presser la goupille de pression (5) contre une paroi du corps porteur (1) formée par l'évidement de matériau (3),
3. chauffer localement le corps porteur (1) par la chaleur de friction de la goupille de pression (1) en rotation,
4. déplacer la goupille de pression (5) le long de la paroi formée par l'évidement de matériau (3), de façon que le matériau du corps porteur (1) soit déformé plastiquement et qu'il se forme un tranchant d'évacuation (4).

2. Procédé selon la revendication 1, **caractérisé en ce que** la goupille de pression (5) présente une rainure (6) ayant une largeur, dont la largeur correspond à la largeur du tranchant d'évacuation (4) à fabriquer.

3. Procédé selon la revendication 1 ou 2, **caractérisé en ce qu'**on apporte une poudre d'alliage sur le corps porteur (1) dans la région de l'évidement de matériau (3).

4. Procédé selon l'une quelconque des revendications 1 à 3, **caractérisé en ce que** la région du tranchant d'évacuation (4) présente une dureté supérieure à celle du reste du corps porteur (1).

5. Procédé selon l'une ou plusieurs des revendications 1 à 3, **caractérisé en ce que** l'on durcit le tranchant d'évacuation (4).

6. Procédé selon l'une quelconque des revendications précédentes, **caractérisé en ce que** les évidements de matériau (3) présentent un contour périphérique fermé.

7. Procédé selon l'une quelconque des revendications précédentes, **caractérisé en ce que** les évidements de matériau (3) présentent des ouvertures débouchant radialement du corps porteur (1).

8. Procédé selon la revendication 1, **caractérisé en ce que** l'on apporte, dans la région du tranchant d'évacuation (4), un alliage en un acier plus fortement allié.

9. Procédé selon la revendication 8, **caractérisé en ce que** l'on ajoute à l'alliage des éléments du groupe voisin IV. à VIII. du tableau périodique des éléments.

10. Procédé selon la revendication 8 ou 9, **caractérisé en ce que** l'apport d'alliage s'effectue sous la forme d'une poudre d'alliage.

11. Procédé selon l'une ou plusieurs des revendications précédentes, **caractérisé en ce que** l'on réalise les tranchants d'évacuation (4) dans la région arrière des évidements de matériau (3), relativement au sens de rotation R de la lame de scie.

12. Procédé selon l'une ou plusieurs des revendications précédentes, **caractérisé en ce que** l'on réalise les tranchants d'évacuation (4) de telle façon qu'ils présentent un contour en forme d'arc.
